# EUROPEAN PATENT SPECIFICATION

(11) **EP 2 844 791 B1**
(45) Date of publication and mention of the grant of the patent: **18.10.2017**
(21) Application number: 13721870.7
(22) Date of filing: 26.04.2013
(51) Int. Cl.: D04H 1/435, D04H 3/011, D01F 6/62, D01F 6/92

(54) **PROCESS FOR MAKING NON-WOVEN FABRICS USING POLYLACTIDE RESIN BLENDS**
HERSTELLUNGSVERFAHREN EINES VLIESSTOFFES ENTHALTEND POLYMILCHSÄURE
PROCÉDÉ DE FABRICATION D'UN NON-TISSÉ À BASE DE RÉSINE COMPRENANT DE L'ACIDE POLYLACTIQUE

(30) Priority: 29.04.2012 US 201261639925 P
(43) Date of publication of application: 11.03.2015
(73) Proprietor: NatureWorks LLC, Minnetonka, MN 55345 (US)
(72) Inventor: KAMANN, Chad H., Carver, MN 55315 (US); GREEN, Robert A., Cary, NC 27519 (US); RANDALL, Jed Richard, Minneapolis, MN 55406 (US); KIRSCHBAUM, Donavon, Savage, MN 55378 (US); VALENTINE, James R., Chanhassen, MN 55317 (US)
(74) Representative: Nevant, Marc
(86) International application number: PCT/US2013/038348
(87) International publication number: WO 2013/165832

(56) References cited:
- WO-A1-98/50611
- WO-A1-99/23163

## Description

This invention relates to processes for making non-woven fabrics from polylactide resins via spun-melt processes such as melt-blowing and spun-bounding processes.

Polylactide (also known as polylactic acid or "PLA") is a thermoplastic polymer that is useful in a variety of applications. Among these is the production of various types of fiber products. PLA offers environmental benefits not seen in most high-volume plastics. PLA is manufactured at commercial scale from annually renewable feedstocks, and therefore does not depend on fossil resources as the source of its carbon. In addition, PLA is hydrolytically unstable and compostable. Under certain compost conditions, PLA degrades more rapidly than most plastics and forms a degradation product (lactic acid) that can be consumed by biological organisms as often are present in the soil.

Non-woven fabrics are manufactured in high volumes for a wide range of applications. They are used in apparel, especially as disposable medical or industrial apparel, as thermal insulation layers and as substrates for synthetic leather. Other medical applications include surgical drapes and sterilization wraps. Non-woven fabrics are used in civil engineering applications such as erosion control, revestment protection, railroad bed stabilization, canal and reservoir lining protection, and to prevent cracking in blacktop highways and airfields. Among other uses for these fabrics are various kinds of filtration media, fabrics such as medical/surgical gowns and drapes, cleaning wipes for personal use (such as baby wipes) and general use (such as hard surface cleansing wipes), sterilization wraps, thermal insulation, synthetic leather substrates, a wide range of packaging applications, hot-melt adhesive sheets, and the like.

Spun-melt processes are widely used to make non-woven fabrics. In spun-melt processes, a starting resin is melt spun and drawn into filaments, which are deposited to form a web in an integrated operation. The two main types of spun-melt processes are melt-blowing and spun-bonding. In melt-blowing, a stream of hot air is used to stretch the fibers as they exit from the spinneret. This elongates the filaments, attenuates their diameters, and induces some orientation. In spun-bounding, the filaments are simultaneously cooled and pneumatically stretched. In each of these processes, the stretched and partially oriented filaments are deposited onto a belt or screen to form the fabric. The individual filaments are held together by entanglement and some filament-to-filament melt bonding that occurs during the process. It is common to strengthen the fabric by calendering or heat bonding it. Calendaring and heat bonding processes involve the application of heat and pressure to the fabric or (more commonly) localized portions of the fabric, to melt individual filaments so that they adhere to each other.

There have been attempts to use PLA in spun-melt processes to make non-woven fabrics. Certain attributes of PLA make it difficult to process and to obtain good quality fabrics.

WO 99/23163 describes a process for making a non-woven fabric, by melt-spinning a polylactic acid resin blend through multiple orifices to produce multiple filaments, pneumatically drawing the filaments and depositing the drawn filaments on a surface to make the fabric. The blend contains a polylactic acid resin and up to 25% by weight of a different aliphatic polyester such as a poly(butylene succinate).

One problem has to do with the melt rheology of PLA and the propensity of PLA to degrade at elevated temperatures. In the melt spinning step, the PLA is forced through very fine orifices. The PLA must have a low melt viscosity if consistent quality product is to be prepared at economical production rates. Melt viscosities of thermoplastic organic polymers generally decrease with increasing temperature. Therefore, with most polymers, melt viscosity can be adjusted into a useful range through control of the processing temperature. If the melt viscosity needs to be reduced, a higher processing temperature is selected. This strategy is of limited value when processing PLA, because PLA degrades more rapidly than many other thermoplastics at the higher processing temperatures needed to reduce its melt viscosity. The resultant reduction in molecular weight causes a significant loss of properties. At the temperatures needed to process PLA without unduly degrading the polymer, its melt viscosity remains somewhat high. Higher operating pressures are therefore needed to obtain a given throughput. The higher operating pressures increase energy costs and in some case equipment costs.

Another problem with PLA non-woven fabrics is their tendency to shrink when exposed to moderately elevated temperatures. This is an important consideration for any fabric that is to be laundered and then machine dried, or when the fabric is to be used in an application in which it is exposed to moderately elevated (for example, up to about 100°C) temperatures. Shrinkage is strongly affected by the orientation of the polymer and (in crystallizable polymers such as PLA) the development of crystallinity. In a spun-melt process, the orientation occurs almost exclusively during the drawing step. The available time window is very short and the extent to which the filaments can be attenuated is often small, compared to other fiber-spinning processes. Orientation helps to induce crystallinity in crystallizable polymers such as PLA. Because PLA crystallizes somewhat slowly, it is difficult for the polymer to develop much crystallinity under the conditions of the spun-melt processes. The high shrinkage exhibited by non-woven PLA fabrics is believed to be attributable at least in part to the low amount of crystallinity that develops in the polymer and the high degree of chain orientation and residual stress in the amorphous phase.

Therefore, there is a need to develop a process for making non-woven PLA fabrics, and to provide non-woven PLA fabrics that have reduced shrinkage.

This invention is a spun-melt process for making a non-woven fabric, comprising continuously
a) melt spinning a PLA resin blend through multiple orifices to form multiple filaments;
b) pneumatically drawing the filaments; and
c) depositing the drawn filaments onto a surface to form the non-woven fabric,
wherein the PLA resin blend is a mixture including (1) at least 75% by weight of the blend of a PLA resin having a number average molecular weight of at least 50,000 g/mol, in which the ratio of the R-lactic and S-lactic units is ≥97:3 or ≤3:97, and wherein the R-lactic units and S-lactic units combined constitute at least 90% of the weight of PLA resin (2) from 1 to 25% by weight of the blend of an aliphatic or aliphatic-aromatic polyester which is not a PLA resin, having a number average molecular weight from 5,000 to 15,000 g/mol and (3) from 0 to 10% by weight of the blend of one or more components different from (1) and (2).

The selection of the PLA resin blend provides important benefits. Very surprisingly, the non-woven fabric exhibits significantly reduced shrinkage, compared to otherwise like fabrics made using neat PLA resin. Operating pressures are reduced very significantly at equivalent operating rates, compared to when a neat PLA resin is used. This reduces energy consumption and therefore energy costs, and permits easier, more consistent continuous operation. Lower pressures also enable less expensive and more flexible die design and engineering, again reducing product cost. Another surprising advantage is that the tensile strength of the non-woven fabric frequently is significantly higher, at comparable elongation, than a like fabric made using neat PLA resin.

Because the PLA resin blend processes easily, it is possible to make very small diameter filaments easily. Fabrics of the invention which are made from very small diameter filaments are excellent filtering materials. Reduced filament diameter also tends to lead to advantages in barrier performance in some applications, and can also improve tactile properties such as softeness and drape in garment fabrics.

The invention is also a non-woven fabric comprising organic polymer filaments bonded together to form a web, wherein at least a portion of the filaments are filaments of a PLA resin blend which is a mixture including (1) at least 75% by weight of the blend of a PLA resin having a number average molecular weight of at least 50,000 g/mol, in which the ratio of the R-lactic and S-lactic units is ≥97:3 or ≤3:97, and wherein the R-lactic units and S-lactic units combined constitute at least 90% of the weight of PLA resin, (2) from 1 to 25% by weight of the blend of an aliphatic or aliphatic-aromatic polyester which is not a PLA resin, having a number average molecular weight from 5,000 to 15,000 g/mol and (3) from 0 to 10% by weight of the blend of one or more components different from (1) and (2).

The invention is also a PLA resin blend comprising (1) at least 75% by weight of the blend of a PLA resin having a number average molecular weight of at least 50,000 g/mol, in which the ratio of the R-lactic and S-lactic units is ≥97:3 or ≤3:97, and wherein the R-lactic units and S-lactic units combined constitute at least 90% of the weight of PLA resin, (2) from 1 to 25% by weight, preferably from 2.5 to 7.5% by weight, of the blend of an aliphatic or aliphatic-aromatic polyester different than PLA, having a number average molecular weight from 5,000 to 15,000 g/mol and (3) from 0 to 10% by weight of the blend of one or more components different from (1) and (2).

For the purposes of this invention, the terms "polylactide", "polylactic acid" and "PLA" are used interchangeably to denote polymers of lactide having repeating units of the structure -OC(=O)CH(CH₃)- ("lactic units"). The PLA resin contains at least 90% by weight of such lactic units, and preferably contains at least 95% or at least 98% by weight of lactic units.

The PLA resin may contain minor amounts, such as up to 10%, preferably up to 5% and more preferably up to 2% by weight, of residues of an initiator compound and/or repeating units derived from other monomers that are copolymerizable with lactide. Suitable such initiators include, for example, water, alcohols, glycol ethers, and polyhydroxy compounds of various types (such as ethylene glycol, propylene glycol, polyethylene glycol, polypropylene glycol, glycerine, trimethylolpropane, pentaerythritol, hydroxyl-terminated butadiene polymers and the like). Examples of copolymerizable monomers include glycolic acid, 2-hydroxybutyric acid and other α-hydroxyacids which can condense with lactic acid and generate "lactide like" cyclic diester impurities in lactide; alkylene oxides (including ethylene oxide, propylene oxide, butylene oxide, tetramethylene oxide, and the like); cyclic lactones; or cyclic carbonates. The PLA resin is most preferably essentially devoid of such repeating units derived from other monomers.

Lactic acid exists in two enantiomeric forms, the so-called "S-" (or "L-") and "R"- (or "D-") forms. "Lactide" is a cyclic diester made from two lactic acid molecules (with loss of two molecules of water). The chirality of the lactic acid is preserved when lactic acid is formed into lactide. Therefore, lactide exists as three stereoisomers: 3S,6S-3,6-dimethyl-1,4-dioxane-2,5-dione (S,S-lactide), 3R,6R-3,6-dimethyl-1,4-dioxane-2,5-dione (R,R-lactide), or 3R,6S-3,6-dimethyl-1,4-dioxane-2,5-dione (R,S-lactide or meso-lactide). When lactide is polymerized to form PLA, the chirality is again mostly preserved (a small amount of racemization often occurs during the polymerization), and the PLA so produced will contain S- and R- lactic units in proportions close to the proportion of S- and R- units in the lactide.

At least 97% of the lactic units in the PLA resin are either S- lactic units or R- units, i.e., the ratio of S- and R-units is ≥97:3 or ≤3:97. This ratio may be ≥98:2 or ≤2:98, ≥98.5:1.5 or ≤1.5:98.5, and may be as high as 100:0 or as low as 0:100. The PLA resin is a semicrystalline grade that by itself crystallizes when quiescently heated at 125°C for one hour to produce a semi-crystalline polymer containing 25 J/g or more of PLA crystallites.

The number average molecular weight of the PLA resin is at least 50,000 g/mol. The number average molecular weight may be up to 200,000 g/mol, but preferably is up to 125,000 g/mol and more preferably up to 100,000 g/mol. The polydispersity (weight average molecular weight divided by number average molecular weight) is preferably 1 to 2.5, more preferably 1.5 to 2. Molecular weights are determined for purposes of this invention by gel permeation chromatography against a polystyrene standard.

The PLA can be prepared by polymerizing lactide in the presence of a polymerization catalyst as described in, for example, U. S. Patent Nos. 5,247,059, 5,258,488 and 5,274,073. This preferred polymerization process typically includes a devolatilization step during which the free lactide content of the polymer is reduced, preferably to less than 1% by weight, more preferably less than 0.5% by weight and especially less than 0.2% by weight. The polymerization catalyst is preferably deactivated or removed from the PLA resin.

The second component of the blend is an aliphatic or aliphatic-aromatic polyester and which has a number average molecular weight of 5,000 to 15,000 g/mol. The second component is not a PLA resin, by which is meant that the second component contains no more than 10% by weight lactic units if any at all. The polydispersity of the aliphatic or aliphatic-aromatic polyester may be 1 to 5, preferably 2 to 5 and more preferably 3 to 5.

For purposes of this invention, an aliphatic polyester is a polymer having multiple ester linkages in the main chain, in which each ester (-O-C(O)-) linkage is directly bonded on each side to an aliphatic carbon atom. An aliphatic-aromatic polyester is a polymer having multiple ester linkages, in which some of the ester linkages are directly bonded on each side to an aliphatic carbon atom, and in which some of the ester groups are directly bonded on at least one side to an aromatic carbon atom.

Useful aliphatic polyesters include, for example, polyesters of an alkylene glycol or poly(alkylene glycol) such as ethylene glycol, 1,4-butanediol, 1,2- or 1,3-propylene glycol, diethylene glycol, triethylene glycol and the like, or a mixture of two or more thereof, and an aliphatic dicarboxylic acid such as succinic acid, adipic acid, maleic acid, fumaric acid, sebacic acid and the like, or a mixture of two or more such aliphatic dicarboxylic acids. Specific examples of aliphatic polyesters of these types include poly(alkylene succinate)s such as polyethylene succinate, polybutylene succinate and the like, poly(alkylene adipate)s such as polyethylene adipate, polybutylene adipate and the like; mixed alkylene succinates and mixed alkylene adipates; polyalkylene succinate coadipates, and the like.

Other useful aliphatic polyesters include polylactones such as poly-ε-caprolactone (PCL), poly-δ-valerolactone and the like, as well as poly(hydroxyalkanonates) (PHAs) other than PLA, including, for example, poly(glycolic acid) and poly(2-hydroxybutrate), poly(3-hydroxybutyrate), poly(3-hydroxybutyrate co-4-hydroxybutyrate) and the like.

Useful aliphatic-aromatic polyesters include polyesters of an alkylene glycol or poly(alkylene glycol) with a mixture of at least one aliphatic dicarboxylic acid and at least one aromatic dicarboxylic acid. These include, for example, polyalkylene succinate co-terephthalates, polyalkylene adipate coterephthalates, polyalkylene succinate conaphthalates, polyalkylene adipate conaphthalates, and the like.

The PLA constitutes at least 75% of the weight of the blend (and the resulting fiber), and may constitute as much as 99% thereof. In some particular embodiments, the PLA constitutes at least 90%, at least 93% or at least 95%, of the weight of the blend and resulting fiber. The aliphatic or aliphatic-aromatic polyester having a 5000-15,000 molecular weight constitutes 1 to 25% of the weight of the blend (and resulting fiber), and in some embodiments constitutes 1 to 10%, 2 to 9% by weight thereof or 2.5 to 7.5% by weight of the blend.

In addition to the PLA resin and the low molecular weight polyester component, the fiber may contain one or more components different from components (1) and (2). Suitable such components include, for example, colorants, slip agents, various types of fiber finishes, antistatic agents, crystallization nucleating agents (including particulate solids such as talc or other mineral particles as well as organic crystallization nucleating agents), other polymeric materials such as polyolefins, poly(alkylene glycol)s and the like. These additional components in the aggregate constitute no more than 10% of the weight of the blend (and resulting fiber), and more preferably constitute no more than 2% by weight thereof. The blend may be devoid of any such additional components.

Non-woven fabrics are made from this PLA resin blend in a spun-melt process by continuously a) melt spinning it through multiple orifices to form multiple filaments, b) pneumatically drawing the filaments; and c) depositing the drawn filaments onto a surface to form the non-woven fabric. Steps a), b) and c) preferably are performed sequentially in an integrated process in which continuously melt-spun filaments from step (a) are passed continuously to step b) and then continuously to step c) without intermediate storage. Such an integrated process may include optional processing steps intermediate to steps a) and b) and/or intermediate to steps b) and c).

Two suitable variations of the spun-melt process include those commonly known as spun-bonding and melt-blowing processes. Melt-blowing is especially preferred. A more detailed description of each of these processes follows.

In a spun-bonding processing, the melt spinning step is performed by melting the PLA resin blend, typically in a single- or twin-screw extruder, and forcing the melted blend, again typically using an extruder, simultaneously through multiple orifices to form multiple filaments. The components of the PLA resin blend can be combined before the melting step. Alternatively, the components of the PLA resin blend can be fed into the melt spinning equipment individually or in various subcombinations, in which case the PLA resin blend is formed as part of the melt spinning step.

The orifices are generally arranged in a bank or banks that each may include 25 to 5000 individual orifices. The size (cross-sectional diameter) of the individual orifices may be, for example, 0.1 to 3 mm, preferably 0.25 to 0.6 mm. The orifices may have a circular or other suitable cross-section.

In the spun-bonding process, the filaments exiting the orifices are pneumatically drawn by contacting the extruded filaments with a cool (compared to the filament temperature) gas stream. The gas stream cools the filaments below the melting temperature of the PLA resin blend ("quenches" the filaments) and draws them. The gas is typically air, but can be any other gas that does not degrade the fiber. The temperature of the gas stream is below the melting temperature of the PLA resin. The temperature of the gas stream preferably is below 100°C, more preferably below 50°C and still more preferably 15 to 40°C. The gas stream is generally a high velocity stream, typically having a velocity of at least 50 meters/second up to the speed of sound. The velocity of the gas stream may be from 150 to 275 meters/second in some embodiments. The gas stream stretches the filaments, lengthening them and reducing their cross-sectional areas. The draw ratio (*i.e*., the ratio of the filament diameter before drawing to that after drawing) during this step is often from about 5:1 to about 35:1.

The filaments may be accumulated to form one or more filament bundles prior to the pneumatic drawing step, if desired.

The drawn filaments are then deposited on a surface to form a web. The surface is typically a moving screen or belt. The filaments can be deposited randomly, deposited in loops, can be aligned in one or more directions (such as the machine or transverse direction, or at some angle thereto), and/or can be deposited in cross-lapped pattern or patterns. Filaments can be deposited in various looped and aligned patterns through the use of various deflector plates, and/or by traversing or oscillating the filaments (or filament bundles) mechanically or aerodynamically during the deposition step. The deposited filaments are typically continuous, except for incidental filament breakage that may occur during the drawing and deposition steps.

In the spun-bound process, the drawn filaments may be pneumatically deposited by passing them through a pneumatic gun. High-pressure gas moves the filaments through a highly constricted area to accelerate the filaments towards the collection surface. If the filaments have been previously collected into bundles during the drawing step(s), the individual filaments preferably are separated during the deposition step. This can be done electrostatically, by applying an electrical charge to the filaments so they electrostatically repel each other. In such a case, the collection surface (typically a moving belt or screen) is preferably made of an electrically conductive material that is grounded, so the electrostatic charge on the filaments becomes discharged as they are deposited.

Multiple layers of filaments can be deposited to form a thicker and/or stronger fabric.

In the spun-bonding process, the deposited filaments are in most cases bonded to entangle and/or adhere them together and strengthen the fabric. Several bonding methods can be used, singly or in conjunction with each other. Among these methods are mechanical needling, thermal bonding, chemical bonding stitch bonding, ultrasonic fusing and hydraulic entanglement. Any of these processes can be applied to form entanglements and/or bonds in larger (as in area bonding) or smaller (as in point bonding) regions of the fabric to locally entangle and/or bond the filaments. Some bonding may occur during the drawing and/or deposition processes due to the entanglement and/or adhesion of filaments.

Various mechanical and chemical finishing operations may be performed on the spun-bond fabric, such as calendaring, embossing, and application of various chemical treatments (such as flame retardants, antistatic agents and the like). Mechanical finishing operations such as calendaring and embossing can be integrated into a bonding step as described above.

Spun-bonded fabrics made in accordance with this process may have basis weights (measured according to ASTM D3776-96) from 5 to 800 g/m², especially from 10 to 200 g/m² and thicknesses from 0.1 to 5 mm, especially from 0.2 to 1.5 mm. Filament diameters are typically from 10 to 50 µm as measured microscopically.

In a melt-blown process, the melt-spinning step is performed in the same general manner as described above with regard to spun-bonding. The PLA resin is melted and forced simultaneously through multiple orifices to form multiple filaments. A suitable orifice size is from 0.1 to 2 mm, preferably from 0.25 to 0.6 mm. In the melt-bonding process, the filaments are pneumatically drawn by contacting the extruded filaments with one or more hot gas stream(s) as the filaments exit the orifices. The gas stream(s) are at a temperature at or above the melting temperature of the PLA resin. The gas stream temperature is preferably at least 170°C and more preferably at least 200°C, to as high as about 360°C. As with the spun-bonding process, the gas stream(s) are generally high velocity stream(s), typically having a velocity of at least 50 meters/second up to the speed of sound, and preferably 150 to 275 meters/second. The hot gas attenuates the filaments, lengthening them and reducing their cross-sectional areas. Because the filaments are not immediately cooled in this process, the draw ratio can be somewhat higher than in the spun-bond process, and the resulting filament diameters tend to be smaller. The draw ratio during this step may be, for example, from 10 to 200, preferably from 25 to 100 and more preferably from 40 to 75.

The melt-spinning and pneumatic drawing in a melt-spinning process is conveniently performed using a die that includes one or more rows of orifices, and slots positioned above and below each row of orifices through which the hot gas is blown onto the filaments as they exit the orifices.

The pneumatically drawn filaments are then quenched to cool them to below the melting temperature of the PLA resin and solidify the filaments. Quenching may be performed pneumatically as well, by contacting the drawn filaments with cooler (typically <100°C, more typically 15 to 40°C) gas. The cooler gas is typically air (so-called "secondary air") that is drawn in by the hot air stream(s). The turbulence of the gas stream(s) also entangles the filaments and randomizes their orientation relative to the surface on which they are to be deposited. Alternatively (or in addition), quenching can be performed by contacting the filaments with a liquid or spray, in which the liquid preferably is water or a mixture of water and a chemical treatment such as an antistatic agent. The filaments are then deposited onto a collection surface, which is in some embodiments a moving belt or screen. The filaments are usually deposited in a random orientation due to the turbulence of the air streams during the upstream steps, although there may be some bias towards the machine direction due to movement of the collection surface (as is the case with a moving belt or screen). A vacuum may be applied to the underside of the collection surface to pull the filaments down onto the surface and compact them somewhat. This vacuum also withdraws hot air from the equipment.

In the melt-spun process, some amount of filament-to-filament bonding may occur during the pneumatic drawing and collection steps. Because of this filament-to-filament bonding and the entanglement that takes place, the non-woven fabric as deposited may have adequate cohesion that it can be used without further bonding. However, additional bonding processes as described with respect to the spun-bonding process can be performed if desired.

It is also possible to perform various mechanical and chemical finishing operations on the melt-blown fabric, as described above with respect to the spun-bonding process.

Melt-blown fabrics made in accordance with this process may have basis weights (determined according to ASTM D3776-96) from 5 to 400 g/m², especially from 20 to 200 g/m² and thicknesses from 0.1 to 5 mm, especially from 0.2 to 1.5 mm. Filament diameters are typically from 0.5 to 30 µm, especially from 0.5 to 7 µm as measured microscopically.

Reduced shrinkage is an important advantage of this invention. Hot air shrink values at 65°C and 100°C often are very much lower than otherwise like fabrics made using neat PLA resin. Hot air shrink is evaluated by placing a 10 cm X 10 cm sample of the fabric in a hot air oven at the specified temperature for 2 minutes. The edges of the sample are not supported or held in place, so the sample can shrink freely. Shrinkage is determined by measuring the length and width of the sample before and after the heating step, and determining the loss in surface area (calculated as length x width). Hot air shrink values measured at 65°C in accordance with this test are commonly below 15% and often as low as 3 to 10%. Hot air shrink values measured at 100°C in accordance with this test are commonly below 20% and often as low as 5 to 15% or even 5 to 10%. This reduction in shrinkage is believed to be attributable to the development of a greater amount of orientation and/or crystallinity in the filaments during the manufacturing process, especially the pneumatic drawing step and any mechanical drawing step that may be performed.

Various modifications of the spun-melt process are possible, as may be known in the art. One modification of particular interest is the production of composite non-woven fabrics that contain both filaments of the PLA blend as described herein, and filaments of other materials, such as, for example, wood pulp filaments. Such composite non-woven processes can be made, for example, by melt-spinning and pneumatically drawing filaments of the PLA blend as described here, and commingling the drawn filaments with filaments of the other material(s). The commingling can be done, for example, by intersecting gas streams in which the respective filaments are entrained, as described, for example, in U. S. Patent No. 4,100,324. The commingled filaments are then deposited onto a surface to form the non-woven fabric, as described before.

Another significant advantage of the invention is that operating pressures and/or operating temperatures can be reduced significantly. At equivalent temperature, the melt viscosity of the PLA resin blend of the invention is significantly lower than that of the PLA resin by itself. As a result, less pressure is needed, at a given temperature and equivalent equipment parameters, to force the PLA resin blend through the orifices at a given rate. Therefore, operating pressures can be reduced significantly. Conversely, lower temperatures are needed to obtain a given melt viscosity, than are needed for the neat PLA resin. Accordingly, the invention in some embodiment allows lower melt-spinning temperatures to be used without an increase in operating pressure. Operating at lower temperature reduces the rate of polymer degradation and molecular weight loss, which in turn leads to increases in tensile and tear strength.

Non-woven fabric made in accordance with this invention have been found to have excellent tensile strength, with little or no loss in elongation, compared to otherwise like non-woven fabrics made using neat PLA resin. Tensile strengths (as measured by Standard IST 110.4) in some embodiments can be 10% to 50% higher than similar fabrics made using neat PLA resin. This improvement in tensile strength is surprising in view of the inclusion of low molecular weight materials in the PLA resin blend; these low molecular weight materials would be expected to reduce tensile properties rather than increase them. The increased tensile strength seen with this invention may be attributable to greater adhesive bonding between the filaments, or to the faster development of crystallinity in the filaments, compared to the neat PLA resin case.

The following examples are provided to illustrate the invention, and are not intended to limit the scope thereof. All parts and percentages are by weight unless otherwise indicated.

### Examples 1-2 and Comparative Samples A - D

Non-woven fabric Examples 1 and 2 and Comparative Samples A-D are produced by melt-blowing. The processing equipment includes a six-inch (15 cm) single screw extruder having a length/diameter ratio of 15. Spinneret diameter is 0.254 mm, with an air gap of 1.5 mm, a setback of 1.5 mm, a die angle of 30 degrees.

The polymer is brought to a temperature of 240°C and extruded through the spinnerets at a throughput of 0.61 grams per minute. Hot air is supplied above and below the spinnerets at a pressure of 17 pounds/square inch and a temperature of 255°C. The collection speed is 14 meters per minute. The basis weight of the fabric is 29 grams/square meter. The die pressure is measured in each case, and is as reported in Table 1 below.

The polymer compositions used are as follows:

| | |
|---|---|
| Example 1 | 95% PLA Resin A (see below) and 5% of a poly(butylene succinate) having an Mₙ of about 5300 and an M_{w} of about 19,000. |
| Example 2 | 95% PLA Resin A and 5% of a poly(butylene succinate co-adipate) having an Mₙ of about 7600 and an M_{w} of about 32,000. |
| Comp. Sample A | Neat PLA Resin A: PLA Resin A has an Mₙ of about 55,000 and contains about 98.6% S-lactic units and 1.4% R-lactic units. |
| Comp. Sample B | 95% PLA Resin A and 5% of a second PLA resin having an Mₙ of about 32,000. The second PLA resin contains a mold release agent and a processing aid. |
| Comp. Sample C | 95% PLA Resin A and 5% of a polypropylene-based elastomer marketed by ExxonMobil Chemicals as Vistamaxx™ 2330. |
| Comp. Sample D | 95% PLA Resin A, 4% of the Vistamaxx 2330 material and 1% of a second PLA resin as described with regard to Comp. Sample B. |

The resulting non-woven fabrics are evaluated for hot air shrinkage at 65°C and 100°C (according to the oven method described above) and tensile strength and elongation (machine direction, according to Standard IST 110.4). The glass transition temperature, temperature of onset of crystallinity and net crystallinity of the filaments is measured by differential scanning calorimetry at a temperature increase rate of 50°C/minute, with measurements being made on the first uptake.

Results of this testing are as reported in Table 1.

**Table 1**

| Designation | Die Pressure, psi (kPa) | Shrinkage, % | | Tensile Properties | | DSC Analysis | | |
|---|---|---|---|---|---|---|---|---|
| | | 65°C | 100°C | Tensile Str., g/denier | Elong., % | Tg, °C | Onset Temp, °C | Net Crystallinity, J/g |
| A* | 430 (2965) | 24 | 31 | 11.8 | 19.7 | 63.9 | 125 | 15.0 |
| 1 | 235 (1620) | 9.9 | 8.6 | 16.4 | 20.0 | 58.6 | 97 | 14.9 |
| 2 | 220 (1517) | 3.7 | 6.8 | 18.0 | 17.6 | 61.0 | 95 | 12.5 |
| B* | 160 (1103) | 25.8 | 28.1 | ND | ND | 62.3 | 120 | 12.5 |
| C* | 320 (2206) | 14.7 | 15.6 | ND | ND | 64 | 98 | 11.8 |
| D* | 190 (1310) | 10.6 | 10.4 | 12.9 | 8.5 | 64 | 98 | 8.8 |

| | | | | | | | | |
|---|---|---|---|---|---|---|---|---|
| *Not an example of this invention. ND = not determined. | | | | | | | | |

As can be seen from the data in Table 1, each of the PLA resin blends results in a reduced die pressure, compared to the neat PLA resin (Comparative Sample A). When the PLA resin is blended with another, low molecular weight PLA resin (Comparative Sample B), die pressure is reduced but no benefit in hot air shrinkage is obtained. When the PLA resin is blended with a polypropylene elastomer (Comparative Sample C) or both the polypropylene elastomer and low molecular weight PLA resin (Comparative Sample D), improvement in hot air shrinkage is obtained, but elongation is reduced very significantly (with little increase in tensile strength).

Examples 1 and 2 of the invention demonstrate the effect of blending a small amount of a low molecular weight polyester (other than PLA) with the PLA resin. The die pressure is reduced substantially. Hot air shrinkage is vastly improved at both 65°C and 100°C. In addition, very significant increases in tensile strength are obtained at comparable or better elongation.

## Claims

1. A process for making a non-woven fabric, comprising continuously
a) melt spinning a PLA resin blend through multiple orifices to form multiple filaments;
b) pneumatically drawing the filaments; and
c) depositing the drawn filaments onto a surface to form the non-woven fabric,
wherein the PLA resin blend is a mixture including (1) at least 75% by weight of the blend of a PLA resin having a number average molecular weight of at least 50,000 g/mol, in which the ratio of the R-lactic and S-lactic units is ≥97:3 or ≤3:97, and wherein the R-lactic units and S-lactic units combined constitute at least 90% of the weight of PLA resin, (2) from 1 to 25% by weight of the blend of an aliphatic or aliphatic-aromatic polyester which is not a PLA resin, having a number average molecular weight from 5,000 to 15,000 g/mol and (3) from 0 to 10% by weight of the blend of one or more components different from (1) and (2).

2. The process of claim 1, wherein the aliphatic or aliphatic-aromatic polyester constitutes 2.5 to 7.5% by weight of the blend.

3. The process of claim 1 or 2, wherein the PLA resin blend contains no more than 2% by weight of component (3).

4. The process of any preceding claim, wherein the aliphatic or aliphatic-aromatic polyester is polyethylene succinate, polybutylene succinate, polyethylene adipate, polybutylene adipate, a poly(alkylene succinate-co-adipate) or a polylactone.

5. The process of any preceding claim, which is a melt-spinning process in which, during step b), the filaments are pneumatically drawn by contacting the extruded filaments with one or more hot gas stream(s) as the filaments exit the orifices.

6. The process of claim 5, wherein the pneumatically drawn filaments have a diameter from 0.5 to 7 µm.

7. The process of any of claims 1-4, which is a spun-bond process in which, during step b), the filaments are pneumatically drawn by contacting the extruded filaments with a cool gas stream.

8. The process of any preceding claim, wherein, prior to step c), the pneumatically drawn filaments are commingled with filaments of at least one other material and the commingled filaments are deposited in step c).

9. A non-woven fabric comprising organic polymer filaments bonded together to form a web, wherein at least a portion of the filaments are filaments of a PLA resin blend which is a mixture including (1) at least 75% by weight of the blend of a PLA resin having a number average molecular weight of at least 50,000 g/mol, in which the ratio of the R-lactic and S-lactic units is ≥97:3 or ≤3:97, and wherein the R-lactic units and S-lactic units combined constitute at least 90% of the weight of PLA resin, (2) from 1 to 25% by weight of the blend of an aliphatic or aliphatic-aromatic polyester which is not a PLA resin, having a number average molecular weight from 5,000 to 15,000 g/mol and (3) from 0 to 10% by weight of the blend of one or more components different from (1) and (2).

10. The non-woven fabric of claim 9, wherein the aliphatic or aliphatic-aromatic polyester constitutes 2.5 to 7.5% by weight of the blend.

11. The non-woven fabric of claim 9 or 10, wherein the PLA resin blend contains no more than 2% by weight of component (3).

12. The non-woven fabric of any of claims 9-11, wherein the aliphatic or aliphatic-aromatic polyester is polyethylene succinate, polybutylene succinate, polyethylene adipate, polybutylene adipate, a poly(alkylene succinate-co-adipate) or a polylactone.

13. The non-woven fabric of any of claims 9-12, further comprising filaments of at least one other material commingled with the filaments of the PLA resin blend.

14. A PLA resin blend comprising (1) at least 75% by weight of the blend of a PLA resin having a number average molecular weight of at least 50,000 g/mol, in which the ratio of the R-lactic and S-lactic units is ≥97:3 or ≤3:97, and wherein the R-lactic units and S-lactic units combined constitute at least 90% of the weight of PLA resin, (2) from 1 to 25% by weight of the blend of an aliphatic or aliphatic-aromatic polyester which is not a PLA resin, having a number average molecular weight from 5,000 to 15,000 g/mol and (3) from 0 to 10% by weight of the blend of one or more components different from (1) and (2).

15. The PLA resin blend of claim 14, comprising from 2.5 to 7.5% by weight of the blend of an aliphatic or aliphatic-aromatic polyester which is not a PLA resin, having a number average molecular weight from 5,000 to 15,000 g/mol.

## Patentansprüche

1. Verfahren zum Herstellen eines Vliesstoffes, umfassend kontinuierlich
a) Schmelzspinnen einer PLA-Harzmischung durch mehrere Düsen, um mehrere Filamente auszubilden,
b) pneumatisches Ziehen der Filamente und
c) Ablagern der gezogenen Filamente auf einer Oberfläche, um den Vliesstoff auszubilden,
wobei die PLA-Harzmischung eine Mischung ist, die (1) wenigstens 75 Gew.-% der Mischung eines PLA-Harzes mit einem Zahlenmittel des Molekulargewichtes von wenigstens 50.000 g/mol, in der das Verhältnis von R-Laktat- und S-Laktateinheiten ≥97:3 oder ≤3:97 ist, und wobei die R-Laktateinheiten und S-Laktateinheiten zusammen wenigstens 90 Gew.-% des PLA-Harzes ausmachen, (2) 1 bis 25 Gew.-% der Mischung eines aliphatischen oder aliphatisch-aromatischen Polyesters, der kein PLA-Harz ist, mit einem Zahlenmittel des Molekulargewichtes von 5.000 bis 15.000 g/mol und (3) 0 bis 10 Gew.-% der Mischung eines oder mehrerer Komponenten, die anders als (1) und (2) sind, umfasst.

2. Verfahren nach Anspruch 1, wobei der aliphatische oder aliphatisch-aromatische Polyester 2,5 bis 7,5 Gew.-% der Mischung ausmacht.

3. Verfahren nach Anspruch 1 oder 2, wobei die PLA-Harzmischung nicht mehr als 2 Gew.-% der Komponente (3) enthält.

4. Verfahren nach einem der vorhergehenden Ansprüche, wobei der aliphatische oder der aliphatisch-aromatische Polyester Polyethylensuccinat, Polybutylensuccinat, Polyethylenadipat, Polybutylenadipat, ein Poly(alkylensuccinat-co-adipat) oder ein Polylacton ist.

5. Verfahren nach einem der vorhergehenden Ansprüche, welches ein Schmelzspinnverfahren ist, in dem während des Schrittes b) die Filamente pneumatisch gezogen werden durch Kontaktieren der extrudierten Filamente mit einem oder mehreren heißen Gasstrom/-strömen, wenn die Filamente die Düsen verlassen.

6. Verfahren nach Anspruch 5, wobei die pneumatisch gezogenen Filamente einen Durchmesser von 0,5 bis 7 µm aufweisen.

7. Verfahren nach einem der Ansprüche 1 bis 4, welches ein Spinngebundenverfahren ist, in dem während des Schrittes b) die Filamente pneumatisch gezogen werden durch Kontaktieren der extrudierten Filamente mit einem kalten Gasstrom.

8. Verfahren nach einem der vorhergehenden Ansprüche, wobei vor Schritt c) die pneumatisch gezogenen Filamente mit Filamenten vermischt werden, die aus wenigstens einem anderen Material bestehen, und in Schritt c) die vermischten Filamente abgelagert werden.

9. Vliesstoff, umfassend organische Polymerfilamente, die zusammen gebunden sind, um ein Gewebe zu bilden, wobei wenigstens ein Anteil der Filamente Filamente einer PLA-Harzmischung sind, die eine Mischung ist, die (1) wenigstens 75 Gew.-% der Mischung eines PLA-Harzes mit einem Zahlenmittel des Molekulargewichtes von wenigstens 50.000 g/mol, in der das Verhältnis von R-Laktat- und S-Laktateinheiten ≥97:3 oder ≤3:97 ist, und wobei die R-Laktateinheiten und S-Laktateinheiten zusammen wenigstens 90 Gew.-% des PLA-Harzes ausmachen, (2) 1 bis 25 Gew.-% der Mischung eines aliphatischen oder aliphatisch-aromatischen Polyesters, der kein PLA-Harz ist, mit einem Zahlenmittel des Molekulargewichtes von 5.000 bis 15.000 g/mol und (3) 0 bis 10 Gew.-% der Mischung eines oder mehrerer Komponenten, die anders als (1) und (2) sind, umfasst.

10. Vliesstoff nach Anspruch 9, wobei der aliphatische oder der aliphatisch-aromatische Polyester 2,5 bis 7,5 Gew.-% der Mischung ausmacht.

11. Vliesstoff nach Anspruch 9 oder 10, wobei die PLA-Harzmischung nicht mehr als 2 Gew.-% der Komponente (3) enthält.

12. Vliesstoff nach einem der Ansprüche 9 bis 11, wobei der aliphatische oder aliphatisch-aromatische Polyester Polyethylensuccinat, Polybutylensuccinat, Polyethylenadipat, Polybutylenadipat, ein Poly(alkylensuccinat-co-adipat) oder ein Polylacton ist.

13. Vliesstoff nach einem der Ansprüche 9 bis 12, ferner umfassend Filamente von wenigstens einem anderen Material, das mit den Filamenten der PLA-Harzmischung vermischt ist.

14. PLA-Harzmischung, die (1) wenigstens 75 Gew.-% der Mischung eines PLA-Harzes mit einem Zahlenmittel des Molekulargewichtes von wenigstens 50.000 g/mol, in der das Verhältnis von R-Laktat- und S-Laktateinheiten ≥97:3 oder ≤3:97 ist, und wobei die R-Laktateinheiten und S-Laktateinheiten zusammen wenigstens 90 Gew.-% des PLA-Harzes ausmachen, (2) 1 bis 25 Gew.-% der Mischung eines aliphatischen oder aliphatisch-aromatischen Polyesters, der kein PLA-Harz ist, mit einem Zahlenmittel des Molekulargewichtes von 5.000 bis 15.000 g/mol und (3) 0 bis 10 Gew.-% der Mischung eines oder mehrerer Komponenten, die anders als (1) und (2) sind, umfasst.

15. PLA-Harzmischung nach Anspruch 14, umfassend 2,5 bis 7,5 Gew.-% der Mischung eines aliphatischen oder aliphatisch-aromatischen Polyesters, der kein PLA-Harz ist, mit einem Zahlenmittel des Molekulargewichtes von 5.000 bis 15.000 g/mol.

## Revendications

1. Procédé pour fabriquer un tissu non tissé, qui comprend en continu :
a) filer par fusion un mélange de résine PLA à travers de multiples orifices pour former des filaments multiples ;
b) étirer pneumatiquement les filaments ; et
c) déposer les filaments étirés sur une surface pour former le tissu non tissé,
où le mélange de résine PLA est un mélange incluant (1) au moins 75% en masse du mélange d'une résine PLA ayant une masse moléculaire moyenne en nombre d'au moins 50,000 g/mol, dans lequel le rapport d'unités R-lactiques et S-lactiques est ≥97:3 ou ≤3:97, et où les unités R-lactiques et S-lactiques combinées constituent au moins 90% de la masse de la résine PLA, (2) de 1 à 25% en masse du mélange d'un polyester aliphatique ou aliphatique aromatique qui n'est pas une résine PLA, ayant une masse moléculaire moyenne en nombre de 5 000 à 15 000 g/mol, et (3) de 0 à 10% en masse du mélange d'un ou plusieurs composants différents de (1) et (2).

2. Procédé selon la revendication 1, dans lequel le polyester aliphatique ou aliphatique aromatique constitue 2,5 à 7,5% en masse du mélange.

3. Procédé selon la revendication 1 ou 2, dans lequel le mélange de résine PLA ne contient pas plus de 2% en masse de composant (3).

4. Procédé selon l'une des revendications précédentes, dans lequel le polyester aliphatique ou aliphatique aromatique est le polyéthylène succinate, le polybutylène succinate, le polyéthylène adipate, le polybutylène adipate, un poly(alkylène succinate-co-adipate) ou une polylactone.

5. Procédé selon l'une des revendications précédentes, qui est un procédé de filage par fusion dans lequel, à l'étape b), les filaments sont étirés pneumatiquement par mise en contact des filaments extrudés avec un ou plusieurs courant(s) de gaz chaud lorsque les filaments sortent des orifices.

6. Procédé selon la revendication 5, dans lequel les filaments étirés pneumatiquement ont un diamètre de 0,5 à 7 µm.

7. Procédé selon l'une des revendications 1-4, qui est un procédé file-lié dans lequel, à l'étape b), the filaments sont filaments sont étirés pneumatiquement par mise en contact des filaments extrudés avec un courant de gas froid.

8. Procédé selon l'une des revendications précédentes, dans lequel, avant l'étape c), les filaments étirés pneumatiquement sont entremêlés avec des filaments d'au moins un autre matériau et les filaments entremêlés sont déposés à l'étape c).

9. Tissu non tissé comprenant des filaments de polymère organique liés entre eux pour former une toile, dans lequel au moins une partie des filaments sont des filaments d'un mélange de résine PLA qui est un mélange incluant (1) au moins 75% en masse du mélange d'une résine PLA ayant une masse moléculaire moyenne en nombre d'au moins 50,000 g/mol, dans lequel le rapport d'unités R-lactiques et S-lactiques est ≥97:3 ou ≤3:97, et où les unités R-lactiques et S-lactiques combinées constituent au moins 90% de la masse de la résine PLA, (2) de 1 à 25% en masse du mélange d'un polyester aliphatique ou aliphatique aromatique qui n'est pas une résine PLA, ayant une masse moléculaire moyenne en nombre de 5 000 à 15 000 g/mol, et (3) de 0 à 10% en masse du mélange d'un ou plusieurs composants différents de (1) et (2).

10. Tissu non tissé selon la revendication 9, dans lequel le polyester aliphatique ou aliphatique aromatique constitue 2,5 à 7,5% en masse du mélange.

11. Tissu non tissé selon la revendication 9 ou 10, dans lequel le mélange de résine PLA ne contient pas plus de 2% en masse de composant (3).

12. Tissu non tissé selon l'une des revendication 9-11, dans lequel le polyester aliphatique ou aliphatique aromatique est le polyéthylène succinate, le polybutylène succinate, le polyéthylène adipate, le polybutylène adipate, un poly(alkylène succinate-co-adipate) ou une polylactone.

13. Tissu non tissé selon l'une des revendications 9-12, qui comprend en outre des filaments d'au moins un autre matériau entremêlés avec les filaments du mélange de résine PLA.

14. Mélange de résine PLA comprenant (1) au moins 75% en masse du mélange d'une résine PLA ayant une masse moléculaire moyenne en nombre d'au moins 50,000 g/mol, dans lequel le rapport d'unités R-lactiques et S-lactiques est ≥97:3 ou ≤3:97, et où les unités R-lactiques et S-lactiques combinées constituent au moins 0% de la masse de la résine PLA, (2) de 1 à 25% en masse du mélange d'un polyester aliphatique ou aliphatique aromatique qui n'est pas une résine PLA, ayant une masse moléculaire moyenne en nombre de 5 000 à 15 000 g/mol, et (3) de 0 à 10% en masse du mélange d'un ou plusieurs composants différents de (1) et (2).

15. Mélange de résine PLA selon la revendication 14, qui comprend de 2,5 à 7,5% en masse du mélange d'un polyester aliphatique ou aliphatique aromatique qui n'est pas une résine PLA, ayant une masse moléculaire moyenne en nombre de 5 000 à 15 000 g/mol
